# FASCICULE DE BREVET EUROPEEN

(11) **EP 2 661 575 B1**
(45) Date de publication et mention de la délivrance du brevet: **09.08.2017**
(21) Numéro de dépôt: 12702578.1
(22) Date de dépôt: 03.01.2012
(51) Int. Cl.: F16K 37/00, G05D 16/06

(54) **DETENDEUR DE GAZ POUR OUTILLAGE A MAIN.**
GASREGLER FÜR HANDWERKZEUGE
GAS REGULATOR FOR HAND TOOLS

(30) Priorité: 07.01.2011 FR 1150140
(43) Date de publication de la demande: 13.11.2013
(73) Titulaire: Hampiaux S.A.S., 54000 Nancy (FR)
(72) Inventeur: HAMPIAUX, Claude, F-54000 Nancy (FR)
(74) Mandataire: Novagraaf Technologies
(86) Numéro de dépôt international: PCT/FR2012/050007
(87) Numéro de publication internationale: WO 2012/093232

(56) Documents cités:
- EP-A2- 0 959 292
- WO-A1-2010/104987
- US-A- 4 718 445
- US-B1- 6 343 619

## Description

### DOMAINE DE L'INVENTION

L'invention concerne un détendeur de gaz pour outillage à main, en particulier pour alimenter en gaz des appareils de soudure ou d'oxycoupage. Un tel détendeur est destiné à être placé sur des bouteilles de gaz comprimé, telles que par exemple des bouteilles d'acétylène, d'oxygène ou d'azote.

### TECHNIQUE ANTÉRIEURE

On connaît déjà de tels détendeurs qui permettent de disposer du gaz à un niveau de pression constant au cours de l'utilisation et ajustable en fonction de l'utilisation qui en est faite. Par exemple, l'acétylène peut être utilisé pour le soudage, auquel cas il est intéressant de fournir le gaz à une pression comprise entre 0,2 et 0,5 bar. Le même gaz peut être utilisé pour l'oxycoupage, auquel cas il est préférable d'alimenter un chalumeau à une pression comprise entre 0,5 et 1 bar. Concernant l'oxygène, celui-ci peut être fourni entre 1 et 1,5 bar pour le soudage, et entre 3 et 8 bar pour l'oxycoupage.

Un détendeur comporte classiquement une chambre haute pression et une chambre basse pression séparées par un clapet. Le clapet est poussé sur un siège par un ressort, tandis qu'une tige reliée à une membrane agit de manière antagoniste pour soulever le clapet de son siège et laisser passer du gaz de la chambre haute pression vers la chambre passe pression. Un autre ressort dit de réglage agit également sur la membrane à l'opposé de la tige avec une force ajustable. Cette force détermine la pression dans la chambre basse pression par l'équilibre qui est obtenu entre l'action des ressorts et celle du gaz sur la membrane.

Le document GB 449 057 montre par exemple un détendeur fonctionnant sur ce principe. Une vis accessible à l'utilisateur permet d'agir sur le ressort agissant sur la membrane. Le détendeur est muni de deux manomètres, l'un relié à la chambre haute pression, l'autre à la chambre basse pression. L'indication de la haute pression donne une information sur la quantité de gaz contenue dans la bouteille qui alimente le détendeur en gaz, tandis que le deuxième manomètre indique le niveau de pression après détente. En général, l'utilisateur agit sur la vis et contrôle sur le manomètre le niveau de pression obtenu après détente.

Ce genre de détendeur présente des points de faiblesse qui les rendent particulièrement sensibles aux chocs. Un tel détendeur est utilisé par exemple sur un chantier de plomberie ou dans un atelier et nécessite d'être démonté de la bouteille lorsque celle-ci est vide. Pendant cette manoeuvre, il arrive de temps en temps que le détendeur tombe. Les manomètres sont des parties saillantes et sont donc particulièrement exposés aux chocs. Il a déjà été proposé de munir le détendeur d'une coque de protection en matière synthétique souple telle qu'un élastomère, mais cet ajout grève le prix de l'équipement, en plus d'alourdir l'appareil.

On a proposé dans le document EP 959 292 A un appareil compact qui est moins sensible aux chocs. La forme générale du détendeur est cylindrique, et un manomètre de basse pression est logé dans un bouton à une extrémité du cylindre. Le bouton sert au réglage du niveau de pression de détente.

Cependant, cet appareil ne dispose que d'un manomètre et ne permet pas de donner une indication de la pression dans la bouteille, et donc il ne permet pas de suivre l'évolution de la réserve de gaz.Le document WO 2010/104987 A1 montre un détendeur dans lequel les deux manomètres sont intégrés dans un corps monobloc.

### OBJECTIFS DE L'INVENTION

L'invention vise à fournir un détendeur de gaz comprimé pour outillage à main qui puisse donner une indication du niveau de réserve de gaz dans une bouteille, qui soit compact et peu exposé aux chocs, tout en permettant un réglage du niveau de pression du gaz détendu.

### EXPOSÉ DE L'INVENTION

Avec ces objectifs en vue, l'invention a pour objet un détendeur de gaz comprimé comportant un corps, un raccord d'entrée fixé sur le corps pour connecter le détendeur à un réservoir de gaz comprimé, un raccord de sortie fixé sur le corps pour délivrer le gaz détendu, des moyens de détente pour réduire la pression du gaz en provenance du raccord d'entrée à une pression de détente prédéterminée vers le raccord de sortie et des moyens de réglage montés sur le corps et agissant sur les moyens de détente pour déterminer la pression de détente du gaz, le détendeur étant caractérisé en ce qu'il comporte des moyens d'ajustage pour ajuster la position relative d'une échelle et d'un repère, l'échelle et le repère étant liés l'un au corps et l'autre aux moyens de réglage afin de repérer la position relative des moyens de réglage sur le corps et en ce qu'il ne comporte pas de moyens d'indication d'une mesure de la pression de détente.

Grâce à l'invention, on supprime la nécessité d'équiper le détendeur d'un manomètre indiquant le niveau de pression de détente. En effet, on peut, par une opération d'ajustage déterminer une correspondance entre une position des moyens de réglage et la pression détendue. Avec les moyens d'ajustage, on fait correspondre une indication de niveau de pression souhaité par l'échelle et le repère avec une position des moyens de réglage qui permet d'obtenir ce niveau de pression. Il n'est donc pas nécessaire d'avoir une indication mesurée de la pression de détente.

Selon une disposition constructive, l'échelle est portée par une première bande souple en matière synthétique. La bande peut porter des indications, et elle est placée soit sur une pièce mobile des moyens de réglage, soit sur le corps pour que les indications correspondent, en lien avec le repère, à un niveau de pression détendue. Les indications de l'échelle peuvent être par exemple des graduations numériques ou des plages repérées par des codes de couleur. Plusieurs plages peuvent être juxtaposées afin de correspondre à diverses utilisations, telles que par exemple l'oxycoupage et le soudage. On a constaté qu'une telle technique de bande en matière synthétique était durable et sans glissement.

De manière similaire, le repère est porté par une deuxième bande souple en matière synthétique. La même technique est utilisée pour le repère que pour l'échelle. Ainsi, on peut fixer d'abord soit l'échelle, soit le repère, et ajuster ensuite la position de l'autre pendant l'opération d'ajustage.

De manière particulière, le corps a une forme sensiblement cylindrique.

Dans ce cas, on peut prévoir que le corps comporte un manomètre à l'une de ses extrémités. Ainsi, le manomètre ne fait pas saillie du corps. En effet, le manomètre est en général également de forme cylindrique et on peut prévoir que le manomètre s'inscrive dans le diamètre du corps.

Toujours dans le cas du corps cylindrique, les moyens de réglage peuvent comporter un bouton pivotant dans l'axe du corps et s'inscrivant sensiblement dans le prolongement du corps. Un tel bouton est reconnu pour être facile à manipuler. De plus, en s'inscrivant dans le prolongement du corps, il conserve au détendeur une forme sans partie saillante, ce qui lui confère une moindre sensibilité aux risques de chocs.

Dans le cas d'une échelle formée d'une première bande en matière synthétique, le bouton comporte une première gorge circulaire dans laquelle la première bande est logée. En étant logée dans la gorge, la bande est ainsi mieux protégée des agressions en évitant d'être sollicitée lors de la manipulation du bouton. En effet, les doigts d'une personne qui manipule le bouton s'appuient sur les bords de la gorge et en général n'atteignent pas le fond de la gorge, ou avec très peu de force d'appui. De plus, la gorge sert de guidage lors de la mise en place de la bande.

De manière similaire, le corps comporte une deuxième gorge circulaire dans laquelle la deuxième bande est logée. Les mêmes avantages exposés précédemment en découlent pour la deuxième bande.

Selon un perfectionnement, le corps comporte une coque tubulaire entourant le manomètre. La coque assure une protection mécanique certaine du manomètre, tout en s'inscrivant dans la continuité du corps. La coque laisse une fenêtre libre afin d'accéder à la lecture des indications du manomètre.

L'invention a aussi pour objet un procédé d'ajustage d'un détendeur tel que décrit précédemment, selon lequel on alimente le détendeur en gaz sous pression par le raccord d'entrée, on règle une pression de détente à laquelle le gaz qui passe par le raccord de sortie est détendu en agissant sur les moyens de réglage, et on ajuste la position relative de l'échelle et du repère afin de faire correspondre leur indication au niveau de pression prédéterminé.

### BRÈVE DESCRIPTION DES FIGURES

L'invention sera mieux comprise et d'autres particularités et avantages apparaîtront à la lecture de la description qui va suivre, la description faisant référence aux dessins annexés parmi desquels :

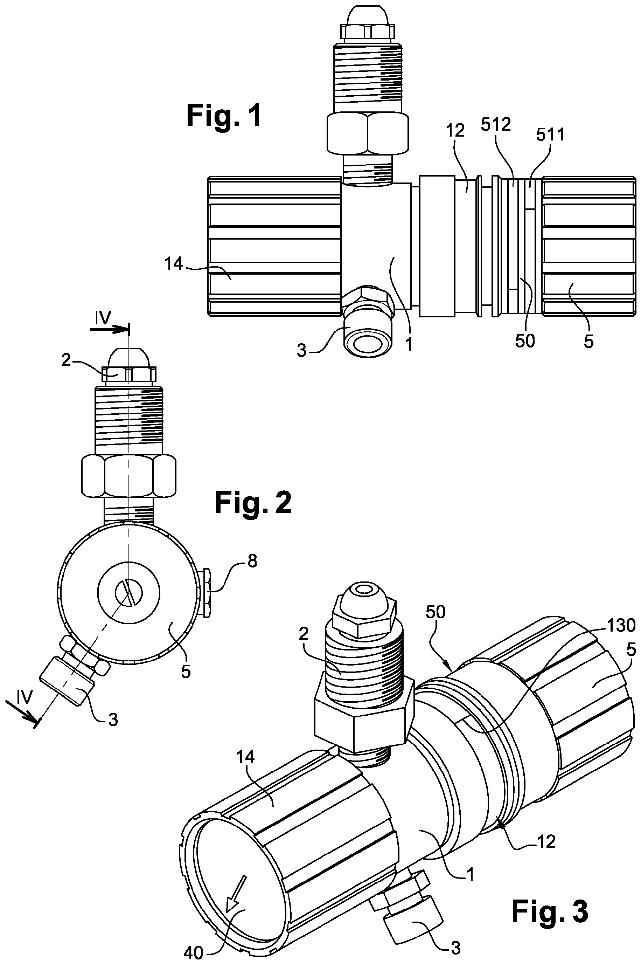

- la figure 1 est une vue de côté d'un détendeur conforme à l'invention ;
- la figure 2 est une vue de face du détendeur de la figure 1 ;
- la figure 3 est une vue en perspective du détendeur de la figure 1 ;

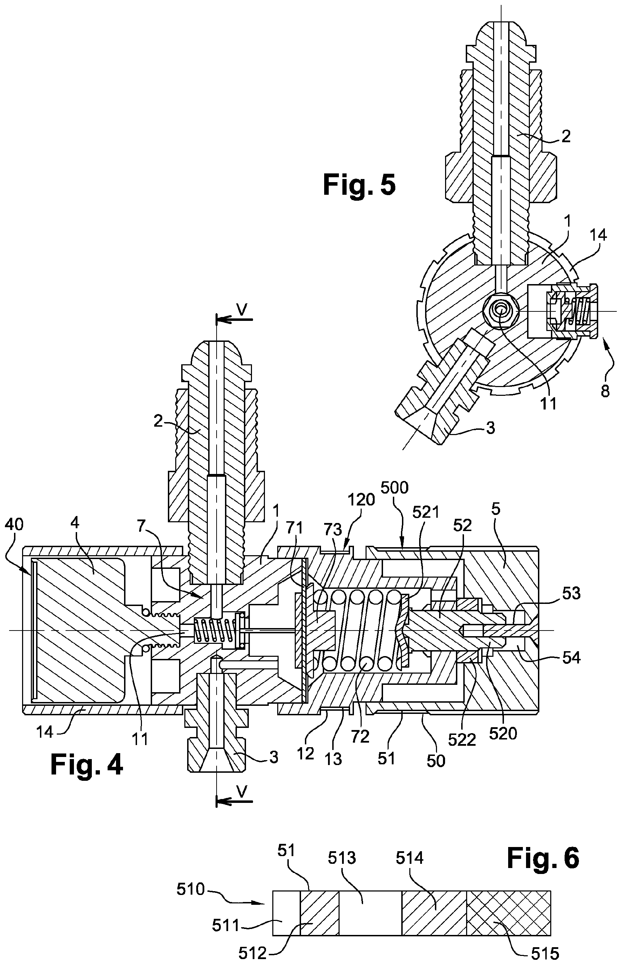

- la figure 4 est une vue en coupe selon la ligne IV-IV de la figure 2 ;
- la figure 5 est une vue en coupe selon la ligne V-V de la figure 4 ;
- la figure 6 est une vue d'une première bande en position déployée.

### DESCRIPTION DETAILLÉE

Le détendeur selon l'invention a un corps 1 de forme générale cylindrique sur lequel sont rapportés radialement un raccord d'entrée 2 et un raccord de sortie 3. Il est destiné à être connecté par le raccord d'entrée 2 à une bouteille de réserve d'un gaz comprimé, non représentée, et à délivrer par le raccord de sortie 3 le gaz à un niveau de pression régulé et inférieur à celui de la pression d'entrée. Le détendeur comporte à une première extrémité un manomètre 4 dont le cadran 40 s'étend le long d'une face frontale du cylindre. Le détendeur comporte à sa deuxième extrémité, à l'opposé de la première extrémité, un bouton 5 pivotant faisant partie des moyens de réglage permettant de contrôler le niveau de pression du gaz détendu.

Le bouton 5 comporte une première gorge 50 circulaire à proximité de la jonction avec le corps 1. Une première bande 51 souple en matière synthétique et autocollante est fixée sur le fond 500 de la première gorge 50. Une échelle 510 est dessinée sur la première bande 51 souple, par exemple par sérigraphie. La première bande 51 est transparente, et le marquage de l'échelle 510 est réalisé du côté de la face en contact avec le fond de la première gorge 50, de manière à ce que le marquage ne soit pas exposé à l'usure. Par ailleurs, le bouton 5 comporte sur sa face cylindrique des reliefs aptes à faciliter sa manipulation.

Le corps 1 comporte en regard du bouton 5 pivotant une deuxième gorge 12 circulaire. Une deuxième bande 13 souple en matière synthétique et autocollante est fixée sur le fond de la deuxième gorge 12. La deuxième bande 13 comporte un repère sous la forme d'un trait 130 s'étendant selon une génératrice du corps 1.

Le manomètre 4 est fixé sur le corps 1 par vissage. Il est en communication avec un canal 11 en provenance du raccord d'entrée 2. Le manomètre 4 est entouré d'une coque 14 tubulaire intégrée au corps 1 par vissage. La coque 14 est par exemple métallique.

Le détendeur comporte aussi une soupape de sécurité 8 apte à limiter la pression dans la partie basse pression. La soupape de sécurité 8 est fixée radialement sur le corps, sensiblement dans le même plan que les raccords d'entrée 2 et de sortie 3.

Les moyens de réglage comportent en outre une vis de réglage 52 qui coopère avec un filetage dans l'axe du corps 1 à la deuxième extrémité de celui-ci. La vis de réglage 52 comporte à son extrémité un tenon 520 dont deux faces sont parallèles entre elles et à l'axe de la vis de réglage 52. Le bouton 5 est fixé sur la vis de réglage 52 par une mortaise 54 qui reçoit le tenon 520 et par une vis de fixation 53 qui se visse dans le tenon 520 et maintient le bouton en appui sur la vis de réglage 52.

La vis de réglage 52 comporte à son extrémité opposée au tenon 520 une coupelle 521 sur laquelle s'appuie un ressort 72. Le ressort 72 prend appui à l'autre extrémité sur un plateau 73, lequel est en appui sur une membrane 71. Des moyens de détente 7, connus en soi et qui comprennent en particulier la membrane 71, le plateau 73 et le ressort 72, sont logés dans le corps 1 pour contrôler la détente du gaz entre le raccord d'entrée 2 et le raccord de sortie 3. La vis de réglage 52 comporte en outre un écrou 522 qui est collé sur le filetage entre le corps 1 et le bouton 5, de manière à former une butée à la vis de réglage 52 dans le sens du vissage.

Le corps 1, le bouton 5 et la vis de réglage 52 sont réalisés par exemple par décolletage de laiton, mais ils pourraient aussi être réalisés en matière synthétique moulée.

La tension exercée par le ressort 72 sur la membrane 71 détermine le niveau de pression du gaz détendu. Cette tension est modulée par la vis de réglage 52 : en vissant la vis dans le corps 1 à l'aide du bouton 5, la tension du ressort 72 sur la membrane 71 est augmentée, ce qui se traduit par une pression du gaz détendu plus élevée. Le maximum est atteint lorsque la vis de réglage 52 est en butée sur le corps 1 par l'intermédiaire de l'écrou 522. A l'inverse, une pression du gaz détendu plus faible est obtenue en dévissant la vis de réglage 52.

Après les opérations de montage du détendeur, on effectue une opération d'ajustage afin de positionner de manière relative la première bande 51 et la deuxième bande 13. On peut commencer par placer et fixer la deuxième bande 13, sur laquelle est placé le repère 130, sur le fond 120 de la deuxième gorge 12. Puis, on connecte le raccord d'entrée 2 sur un réservoir de gaz comprimé ou sur une conduite d'alimentation en gaz comprimé. Le niveau de pression d'alimentation est par exemple compris entre 30 et 200 bars.

On connecte par ailleurs le raccord de sortie 3 à un manomètre d'étalonnage suivi d'un système de purge.

On alimente alors le détendeur en gaz comprimé. On agit sur le bouton 5 de manière à obtenir sur le manomètre étalon un niveau de pression prédéterminé, par exemple 4 bars. On place et on fixe alors la première bande 51 avec l'échelle 510 sur le fond de la première gorge 50, sur le bouton 5, de manière à ce qu'une indication de l'échelle 510, correspondant au niveau de pression prédéterminé, soit en regard du repère 130. Les bandes 51, 13, positionnables librement dans les gorges, constituent des moyens d'ajustage qui permettent d'adapter l'indication de la position des moyens de réglage en fonction du fonctionnement réel du détendeur. Grâce à ces moyens d'ajustage, on peut se dispenser d'une mesure de la pression du gaz détendu.

L'échelle 510 est par exemple constituée d'une première zone neutre 511, suivie d'une première zone verte 512, d'une deuxième zone neutre 513, d'une deuxième zone verte 514 et d'une zone rouge 515. Lorsque le repère 130 est en regard de l'une des zones vertes 512, 514, la pression de détente est réglée dans des plages normales d'utilisation pour un premier et un deuxième type d'application, par exemple pour le soudage et l'oxycoupage. L'échelle 510 peut être complétée par des indications numériques de pression, par exemple aux limites des zones vertes 512, 514, et par des indications d'utilisation, expliquant le type d'application correspondant à chaque zone verte 512, 514.

En utilisation, le montage du détendeur est similaire, hormis qu'on met en place un appareil consommateur du gaz à la place du système de purge, sans manomètre étalon, sur le raccord de sortie 3. L'appareil est par exemple un chalumeau de soudage ou d'oxycoupage. On règle le bouton 5 pour qu'il soit en regard de la zone verte 5111, 5121 du type d'utilisation correspondant à celle prévue. La pression du gaz détendu se trouve automatiquement à un niveau compatible avec l'utilisation. L'utilisateur peut également vérifier le niveau de réserve sur le manomètre 4.

## Revendications

1. Détendeur de gaz comprimé comportant un corps (1), un raccord d'entrée (2) fixé sur le corps (1) pour connecter le détendeur à un réservoir de gaz comprimé, un raccord de sortie (3) fixé sur le corps (1) pour délivrer le gaz détendu, des moyens de détente (71) pour réduire la pression du gaz en provenance du raccord d'entrée (2) à une pression de détente prédéterminée vers le raccord de sortie (3) et des moyens de réglage (5, 52) montés sur le corps (1) et agissant sur les moyens de détente (71) pour déterminer la pression de détente du gaz, le détendeur étant **caractérisé en ce qu'**il comporte des moyens d'ajustage (51, 13) pour ajuster la position relative d'une échelle (510) et d'un repère (130), l'échelle (510) et le repère (130) étant liés l'un au corps (1) et l'autre aux moyens de réglage (5, 52) afin de repérer la position relative des moyens de réglage (5, 52) sur le corps (1) et **en ce qu'**il ne comporte pas de moyens d'indication d'une mesure de la pression de détente.

2. Détendeur selon la revendication 1, l'échelle (510) est portée par une première bande (51) souple en matière synthétique.

3. Détendeur selon la revendication 1, le repère (130) est porté par une deuxième bande (13) souple en matière synthétique.

4. Détendeur selon la revendication 1, dans lequel le corps (1) a une forme sensiblement cylindrique.

5. Détendeur selon la revendication 4, dans lequel le corps (1) comporte un manomètre (4) à l'une de ses extrémités.

6. Détendeur selon la revendication 4, dans lequel les moyens de réglage (5, 52) comportent un bouton (5) pivotant dans l'axe du corps (1) et s'inscrivant sensiblement dans le prolongement du corps (1).

7. Détendeur selon les revendications 2 et 6 prises en combinaison, dans lequel le bouton (5) comporte une première gorge (50) circulaire dans laquelle la première bande (51) est logée.

8. Détendeur selon les revendications 3 et 4 prises en combinaison, dans lequel le corps (1) comporte une deuxième gorge (12) circulaire dans laquelle la deuxième bande (13) est logée.

9. Détendeur selon la revendication 5, dans lequel le corps (1) comporte une coque (14) tubulaire autour du manomètre (4).

10. Procédé d'ajustage d'un détendeur selon l'une des revendications 1 à 9, selon lequel on alimente le détendeur en gaz sous pression par le raccord d'entrée (2), on règle une pression de détente à laquelle le gaz qui passe par le raccord de sortie (3) est détendu en agissant sur les moyens de réglage (5, 52), et on ajuste la position relative de l'échelle (510) et du repère (130) afin de faire correspondre leur indication au niveau de pression prédéterminé.

## Patentansprüche

1. Druckgasregler, aufweisend einen Körper (1), einen Einlassstutzen (2), der auf dem Körper (1) befestigt ist, um den Regler mit einem Druckgasbehälter zu verbinden, einen Auslassstutzen (3), der auf dem Körper (1) befestigt ist, um das entspannte Gas bereitzustellen, Entspannungsmittel (71), um den Druck des Gases, das vom Einlassstutzen (2) kommt, auf einen vorbestimmten Entspannungsdruck in Richtung des Auslassstutzens (3) und der Regelungsmittel (5, 52) zu reduzieren, die auf dem Körper (1) montiert sind und auf die Entspannungsmittel (71) wirken, um das Druckniveau des Gases zu bestimmen, wobei der Regler **dadurch gekennzeichnet ist, dass** er Justiermittel (51, 13) zum Justieren der relativen Position einer Skala (510) und einer Markierung (130) aufweist, wobei die Skala (510) und die Markierung (130) verbunden sind, die eine mit dem Körper (1) und die andere mit den Regelungsmitteln (5, 52) um die relative Position der Regelungsmittel (5, 52) auf dem Körper (1) zu markieren und dadurch dass er keine Anzeigemittel einer Messung des Entspannungsdrucks aufweist.

2. Regler nach Anspruch 1, wobei die Skala (510) von einem ersten biegsamen Streifen (51) aus synthetischem Material getragen wird.

3. Regler nach Anspruch 1, wobei die Markierung (130) von einem zweiten biegsamen Streifen (13) aus synthetischem Material getragen wird.

4. Regler nach Anspruch 1, wobei der Körper (1) eine im Wesentlichen zylindrische Form hat.

5. Regler nach Anspruch 4, wobei der Körper (1) an einem seiner Enden ein Manometer (4) aufweist.

6. Regler nach Anspruch 4, wobei die Regelungsmittel (5, 52) einen Knopf (5) aufweisen, der in der Achse des Körpers (1) dreht und im Wesentlichen in Verlängerung des Körpers (1) verläuft.

7. Regler nach den Ansprüchen 2 und 6, herangezogen in Kombination, wobei der Knopf (5) eine erste kreisförmige Nut (50) aufweist, in welcher der erste Streifen (51) untergebracht ist.

8. Regler nach den Ansprüchen 3 und 4, herangezogen in Kombination, wobei der Körper (1) eine zweite kreisförmige Nut (12) aufweist, in welcher der zweite Streifen (13) untergebracht ist.

9. Regler nach Anspruch 5, wobei der Körper (1) eine rohrförmige Schale (14) um das Manometer (4) aufweist.

10. Justierverfahren eines Reglers nach einem der Ansprüche 1 bis 9, wobei der Regler über den Einlassstutzen (2) mit Druckgas versorgt wird, ein Entspannungsdruck eingestellt wird, bei dem das Gas, das durch den Auslassstutzen (3) strömt, durch Wirken auf die Regelungsmittel (5, 52) entspannt wird, und die relative Position der Skala (510) und der Markierung (130) justiert werden, damit ihre Angabe mit dem vorbestimmten Druckniveau übereinstimmt.

## Claims

1. A compressed gas expander device including a body (1), an inlet connector (2) attached on the body (1) for connecting the expander device to a compressed gas reservoir, an outlet connector (3) attached on the body (1) for delivering the expanded gas, expansion means (71) for reducing the pressure of the gas from the inlet connector (2) to a predetermined expansion pressure towards the outlet connector (3) and adjustment means (5, 52) are mounted on the body (1) and acting on the expansion means (71) for determining the gas expansion pressure, the expander device being **characterized in that** it includes adjustment means (51, 13) for adjusting the relative position of a scale (510) and of a marker (130), the scale (510) and the marker (130) are being connected one to the body (1) and the other one to the adjustment means (5, 52) in order to locate the relative position of the adjustment means (5, 52) on the body (1) and **in that** it does not include any means for indicating a measurement of the expansion pressure.

2. The expander device according to claim 1, wherein the scale (510) is borne by a first flexible strip (51) in a synthetic material.

3. The expanded advice quantum claim 1, wherein the marker (130) is borne by a second flexible strip (13) in a synthetic material.

4. The expander device according to claim 1, wherein the body (1) has a substantially cylindrical shape.

5. The expander device according to claim 4, wherein the body (1) includes a manometer (4) at one of its ends.

6. The expanded advice according to claim 4, wherein the adjustment means (5, 52) include a button (5) pivoting in the axis of the body (1) and approximately included in the extension of the body (1).

7. The expander device according to claims 2 and 6 taken as a combination, wherein the button (5) includes a first circular groove (50) in which the first strip (51) is accommodated.

8. The expander device according to claims of 3 and 4 taken as a combination, wherein the body (1) includes a second circular groove (12) in which the second strip (13) is accommodated.

9. The expander device according to claim 5, wherein the body (1) includes a tubular shell (14) around the manometer (4).

10. A method for adjusting an expander device according to one of claims 1 to 9, according to which the expander device is supplied with pressurized gas through the inlet connector (2), an expansion pressure is adjusted at which the gas which passes through the outlet connector (3) is expanded by acting on the adjustment means (5, 52), and the relative position of the scale (510) and of the marker (130) are adjusted so as to match their indication with the predetermined pressure level.
